# EUROPEAN PATENT APPLICATION

(11) **EP 4 506 547 A1**
(43) Date of publication of application: **12.02.2025**
(21) Application number: 23784298.4
(22) Date of filing: 06.04.2023
(51) Int. Cl.: F01P 7/16

(54) **METHOD AND APPARATUS FOR CONTROLLING WATER TEMPERATURE OF ENGINE, DEVICE, AND MEDIUM**

(30) Priority: 06.04.2022 CN 202210355666
(71) Applicant: Great Wall Motor Company Limited, Baoding, Hebei 071000 (CN)
(72) Inventor: CHENG, Dawei, Baoding, Hebei 071000 (CN); HAN, Xiangsong, Baoding, Hebei 071000 (CN); CHEN, Yue, Baoding, Hebei 071000 (CN); MIAO, Chen, Baoding, Hebei 071000 (CN)
(74) Representative: Klunker IP Patentanwälte PartG mbB
(86) International application number: PCT/CN2023/086432
(87) International publication number: WO 2023/193735

(57) **Abstract**

A method for controlling engine water temperature, including that: after a water temperature is obtained the control module, if the water temperature is higher than a first preset water temperature, then a first control signal and a second control signal may be generated respectively by the control module based on relationships between the water temperature and a first output power of an engine as well as between the current water temperature and a second output power of a generator, to allow the engine to reduce the first output power according to the first control signal, and the generator to reduce the second output power according to the second control signal, thereby the water temperature of the engine is reduced. By means of the method for controlling engine water temperature provided in the embodiment of the present application, the engine and the generator can be controlled to reduce their own output power according to the real-time water temperature of the engine, thereby the water temperature of the engine can be reduced, which thus can improve the use conditions of the engine, and increase the durability of the engine.

## Description

The present application claims the priority of the Chinese Patent Application No. 202210355666.3, entitled, "Method for Controlling Engine Water Temperature, Device, Equipment and Medium" filed on April 6, 2022, the entire content of which is incorporated herein by reference.

### TECHNICAL FIELD

The present application relates to the field of control technology, more particularly to a method for controlling engine water temperature, a device, a piece of equipment and a medium.

### BACKGROUND

Hybrid electric vehicle (Hybrid Vehicle) refers to a vehicle whose vehicle drive system is composed of two or more single drive systems that can operate simultaneously, and a driving power of the vehicle is provided by the single drive system alone or in combination according to the actual driving state of the vehicle. According to the connection mode of hybrid drive, hybrid vehicles are generally divided into three categories, i.e., series hybrid vehicles, parallel hybrid vehicles and parallel-series hybrid vehicles. Among them, the parallel-series hybrid vehicles are widely used as a vehicle type that can significantly improve fuel economy. The power system of parallel-series hybrid vehicles consists of three parts, i.e., an engine, a generator and a motor. The power from the motor and the engine can be utilized to drive the vehicle.

Generally, the vehicle's power battery supplies power to the motor, to enable the motor to drive the wheels. When the power battery cannot provide power to the motor due to insufficient power, a power source of the vehicle relies entirely on the engine output, and due to the loss of battery power, the engine needs to drive the generator to charge the power battery. In this case, the engine is overloaded, resulting in excessively high coolant temperature, which affects the engine's performance and service life.

### SUMMARY

In view of this, the embodiments of the present application provide a method for controlling engine water temperature, a device, a piece of equipment, and a medium, so as to reduce the risk of excessive engine water temperature, improve the performance of the engine, and increase the durability.

In accordance with a first aspect, an embodiment of the present application provides a method for controlling engine water temperature, the method includes the follows steps: Obtaining, by a control module, a current water temperature of an engine;
Generating, by the control module, a first control signal and a second control signal based on relationships between the current water temperature and a first output power of the engine as well as between the current water temperature and a second output power of a generator when the current water temperature is higher than a first preset water temperature, where the first control signal is used to instruct the engine to reduce the first output power, and the second control signal is used to instruct the generator to reduce the second output power; and
Controlling, by the control module, the engine to reduce the first output power according to the first control signal, and controlling the generator to reduce the second output power according to the second control signal.

In a possible implementation, the method also includes steps of:
Generating, by the control module, a third control signal based on a relationship between the current water temperature and a third output power of an air-conditioning compressor, where the third control signal is used to instruct the air-conditioning compressor to reduce the third output power; and
Controlling, by the control module, the air-conditioning compressor to reduce the third output power according to the third control signal.

In a possible implementation, before the step of controlling, by the control module, the air-conditioning compressor to reduce the third output power according to the third control signal, the method also comprises steps of:
Obtaining a minimum permitted power for operation of the air-conditioning compressor; and
Determining that the third output power is greater than the minimum permitted power. In a possible implementation, the first control signal is a first torque limit ratio of the engine, and the first torque limit ratio indicates a ratio of an output power reduction value corresponding to the engine to the first output power.

The second control signal is a second torque limit ratio of the generator, and the second torque limit ratio indicates a ratio of an output power reduction value corresponding to the generator to the second transmission power.

In a possible implementation, the first torque limit ratio is in a first positive correlation with the current water temperature, and the first positive correlation is that the first torque limit ratio increases with an increase of the current water temperature.

The second torque limit ratio is in a second positive correlation with the current water temperature, and the second positive correlation is that the second torque limit ratio increases with an increase of the current water temperature.

In a possible implementation, the first torque limit ratio is determined according to a maximum required power of a vehicle.

The second torque limit ratio is determined according to a rated power of the generator and a remaining power of a power battery, and the second torque limit ratio is in a third positive correlation with the remaining power of the power battery, and the third positive correlation is that the second torque limit ratio decreases as the remaining power of the power battery decreases.

In a possible implementation, the third control signal is the third power limit ratio of the air-conditioning compressor, and the third power limit ratio indicates a ratio of an output power reduction value corresponding to the air-conditioning compressor to the third output power.

In a possible implementation, after the step of obtaining, by the control module, the current water temperature of the engine, the method also includes steps of:
Generating, by the control module, a fourth control signal based on an external ambient temperature when the current water temperature is lower than a second preset water temperature, and the fourth control signal is used to instruct the engine and the generator to charge the power battery; and
Controlling, by the control module, the engine and the generator to charge the power battery to a target power according to the fourth control signal, where a correlation between the target power and the ambient temperature is predetermined.

In a possible implementation, the control module includes an electronic control unit (ECU) and a hybrid controller (HCU), and the step of generating, by control module, the first control signal and the second control signal based on the relationships between the current water temperature and the first output power of the engine as well as between the current water temperature and the second output power of the generator includes steps of:
Generating, by the ECU, the first control signal and a fifth control signal based on the relationship between the current water temperature and the first output power of the engine, and the fifth control signal is used to control an operation of the HCU; and
Generating, by the HCU, the second control signal based on the fifth control signal and the relationship between the current water temperature and the second output power of the generator.

The step of controlling, by the control module, the engine to reduce the first output power according to the first control signal and controlling the generator to reduce the second output power according to the second control signal includes steps of:
Controlling, by the ECU, the engine to reduce the first output power according to the first control signal; and
Controlling, by the HCU, the generator to reduce the second output power according to the second control signal.

In a possible implementation, the step of generating, by the control module, the third control signal based on the relationship between the current water temperature and the third output power of an air-conditioning compressor includes a step of:
Generating, by the HCU, the third control signal based on the fifth control signal and the relationship between the current water temperature and the third output power of the air-conditioning compressor.
the step of controlling, by the control module, the air-conditioning compressor to reduce the third output power according to the third control signal includes steps of:
   Obtaining, by the HCU, a minimum permitted power for operation of the air-conditioning compressor;
   Determining that the third output power is greater than the minimum permitted power; and
   Controlling the air-conditioning compressor to reduce the third output power according to the third control signal.

In a possible implementation, the first preset water temperature is determined according to a maximum temperature limit corresponding to the engine.

In accordance with a second aspect, an embodiment of the present application provides a device for controlling engine water temperature, the device includes: an acquisition unit, a signal generation unit and a control unit.

The acquisition unit is configured to obtain a current water temperature of an engine.

The signal generation unit is configured to generate a first control signal and a second control signal based on the relationships between the current water temperature and a first output power of the engine as well as between the current water temperature and a second output power of a generator when the current water temperature is higher than a first preset water temperature. The first control signal is used to instruct the engine to reduce the first output power, and the second control signal is used to instruct the generator to reduce the second output power.

The control unit is configured to control the engine to reduce the first output power according to the first control signal, and control the generator to reduce the second output power according to the second control signal.

In accordance with a third aspect, an embodiment of the present application provides a piece of equipment for controlling engine water temperature, the piece of equipment includes: a memory and a processor.

The memory is configured to store relevant program codes;
The processor is configured to invoke the program codes to execute the method for controlling engine water temperature described in any one of the implementations of the first aspect.

In accordance with a fourth aspect, an embodiment of the present application provides a computer-readable storage medium, the computer-readable storage medium is configured to store a computer program, and the computer program is configured to execute the method for controlling engine water temperature described in any one of the implementations of the first aspect.

It thus can be seen that the embodiments of the present application have the following beneficial effects:
To avoid the temperature of the engine being too high and affecting the performance, the water temperature of the engine can be collected regularly and controlled in time.

After the water temperature is obtained by the control module, if the water temperature is higher than the first preset water temperature, indicating that the current water temperature is high, then the first control signal and the second control signal may be generated by control module based on the relationships between the water temperature and the first output power of the engine as well as between the current water temperature and the second output power of the generator, respectively. The first control signal is used to instruct the engine to reduce the first output power, and the second control signal is used to instruct the generator to reduce the second output power. The engine is controlled to reduce the first output power according to the first control signal, and the generator is controlled to reduce the second output power according to the second control signal, thereby the water temperature of the engine is reduced. By means of the method for controlling engine water temperature provided by the embodiment of the present application, the engine and the generator can be controlled to reduce their own output power according to the real-time water temperature of the engine to reduce the load of the engine, thereby the water temperature of the engine can be reduced, which thus can improve the use conditions of the engine, and increase the durability of the engine.

### DESCRIPTION OF THE DRAWINGS

In order to illustrate the technical solutions in the embodiments of the present application more clearly, the drawings required for the description of the embodiments will be briefly introduced below. Obviously, the drawings in the following description are only some embodiments provided in the present application. For ordinary technicians in this field, other drawings may also be obtained based on these drawings.
FIG. 1 is a flow chart of a method for controlling engine water temperature in an embodiment of the present application;
FIG. 2 is a schematic principal diagram for controlling engine water temperature in an embodiment of the present application;
FIG. 3 is a flow chart of another method for controlling engine water temperature in an embodiment of the present application;
FIG. 4 is a schematic diagram of a device for controlling engine water temperature in an embodiment of the present application; and
FIG. 5 is a schematic diagram of a piece of equipment for controlling engine water temperature in an embodiment of the present application.

### DETAILED DESCRIPTION OF THE EMBODIMENTS

The technical solutions in the embodiments of the present application will be clearly and completely described below in combination with the drawings in the embodiments of the present application. The described embodiments are only exemplary implementations of the present application, not all implementations. Other embodiments may be obtained by persons skilled in the art according to the embodiments of the present application without exerting creative efforts, and these embodiments are also within the protection scope of the present application.

Hybrid vehicles are generally divided into three categories, i.e., series hybrid vehicles, parallel hybrid vehicles and parallel-series hybrid vehicles. Among them, a power system of the series hybrid vehicle consists of an engine, a generator and a motor in series. In a series power system, the engine cannot provide power for the vehicle. In general, the electrical energy of the power battery is utilized by the motor to be converted into mechanical energy to drive the vehicle. When the power battery is low on power, the generator is driven by the engine to provide power to the motor and to charge the power battery.

Parallel-series hybrid vehicles are widely used as a vehicle type that can significantly improve fuel economy. The power system of the parallel-series hybrid vehicle consists of an engine, a generator and a motor. The two powers of the motor and the engine can be utilized to drive the vehicle. Generally, the power battery of the parallel-series hybrid electric vehicle provides power to the motor, to allow the motor to drive the wheels. When the power battery is insufficient to provide sufficient power to the motor, the power source of the vehicle depends entirely on the engine, and due to the loss of the battery power, the engine needs to drive the generator to charge the power battery.

For extended-range hybrid power models, when the power battery cannot provide power to the motor due to insufficient power, the engine needs to drive the vehicle and drive the generator to provide power to the motor, which will cause the engine to be overloaded and the output power to be too high, and thus cause the water temperature of the coolant to be too high, affecting the performance and service life of the engine. Based on this, an embodiment of the present application provides a method for controlling engine water temperature to reduce the risk of excessive engine water temperature, improve the use conditions of the engine, and increase the durability. In a specific implementation, the control module may obtain a water temperature of an engine at a regular interval. When the water temperature is higher than a first preset water temperature, indicating that the current water temperature is high. Since the engine needs to drive the generator to operate in order to provide power to the motor or the power battery, the control module may generate a first control signal and a second control signal respectively based on relationships between the water temperature and a first output power of the engine as well as between the current water temperature and a second output power of a generator. The first control signal is used to instruct the engine to reduce the first output power, and the second control signal is used to instruct the generator to reduce the second output power, so that the engine reduces the first output power according to the first control signal, and the generator reduces the second output power according to the second control signal, to reduce the water temperature of the engine. In the method for controlling engine water temperature provided in the embodiment of the present application, the engine and the generator can be controlled to reduce the output power according to a real-time water temperature of the engine to reduce the load of the engine, so that the reducing of water temperature of the engine can be achieved, which improves the use conditions of the engine, and increases the durability of the engine.

The method for controlling engine water temperature provided in the embodiment of the present application will be described below in conjunction with the drawings of the embodiment.

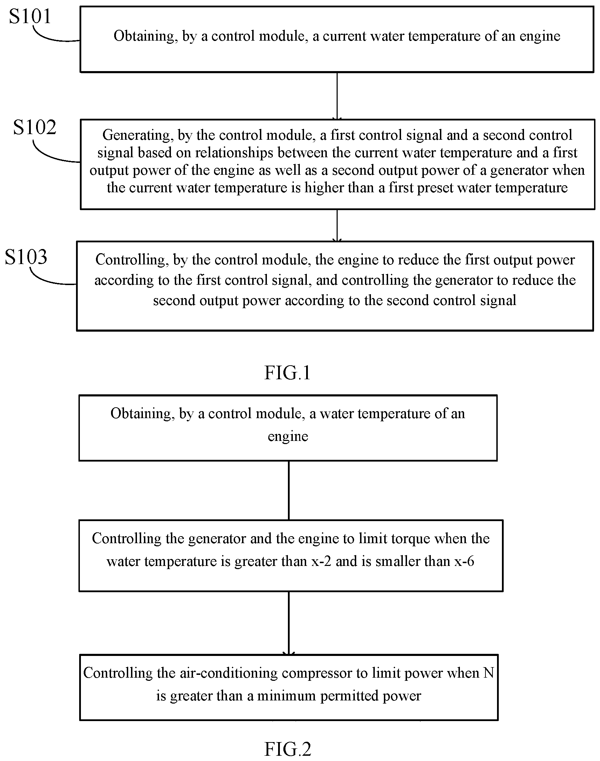

Referring to FIG. 1, which is a flow chart of a method for controlling engine water temperature provided in the embodiment of the present application.

The method mainly includes the following steps S101to S103:
In step S101, a current water temperature of an engine is obtained by a control module.

To reduce the risk of excessive engine water temperature, the water temperature of the engine may be collected regularly so that corresponding control decisions can be made in time according to the current water temperature. In this embodiment, the control module, after receiving a control instruction to collect a water temperature of an engine, may collect the water temperature of the engine by itself, so as to obtain the water temperature. For example, the control module includes a sensor for collecting the water temperature. In addition, the water temperature of the engine may also be collected by an independent water temperature sensor after receiving the control instruction to collect the water temperature of the engine, and then a water temperature signal carrying the current water temperature of the engine is sent by the independent water temperature sensor to the control module, to allow the control module to obtain the water temperature of the engine.

In step S102, a first control signal and a second control signal are generated by the control module based on relationships between the current water temperature and a first output power of the engine as well as between the current water temperature and a second output power of a generator when the current water temperature of the engine is higher than a first preset water temperature.

In this step, the first preset water temperature may be determined according to the maximum temperature limit allowed for long-term operation of the engine. For example, the first preset water temperature may be a value within a certain range smaller than the maximum temperature limit, so that the control module can take a cooling strategy in advance according to the current water temperature to reduce the risk of the engine operating within the maximum temperature limit range, and avoid a sudden and substantial reduction in the power output of the engine which affects the user experience. Thus, it is indicated a risk that the water temperature of the engine is too high when the current water temperature of the engine is higher than the first preset water temperature. At this time, the control module can take a control strategy to reduce the water temperature. In this embodiment, when the output power is too high due to excessive engine load, the water temperature of the engine will rise, so the water temperature can be reduced by reducing the load and output power of the engine. When the power battery is insufficient to charge the motor, the engine needs to drive the generator to provide power to the motor, so the excessive engine load will be resulted when the output power of the generator is too high. Based on this, a possible implementation, when adopting the cooling strategy by the control module, is that the control module is configured to generate the first control signal and the second control signal respectively based on the relationships between the water temperature of the engine and the first output power of the engine as well as between the current water temperature and the second output power of the generator. The first control signal is used to instruct the engine to reduce the first output power, and the second control signal is used to instruct the generator to reduce the second output power, that is, to reduce the load of the engine and reduce the output power of the engine to the generator, which can avoid affecting the user experience due to a significant reduction in the driving force provided by the engine for the vehicle.

In step S103, the engine is controlled by the control module to reduce the first output power according to the first control signal, and the generator is controlled by the control module to reduce the second output power according to the second control signal. The control module, after generating the first control signal and the second control signal, is configured to send the first control signal to the engine to control the engine to reduce the first output power according to the first control signal, and send the second control signal to the generator to control the generator to reduce the second output power according to the second control signal, thereby the current water temperature of the engine is reduced.

In the method for controlling engine water temperature provided by the embodiment of the present application, the engine and the generator can be controlled to reduce the output power according to the real-time water temperature of the engine, thereby the water temperature of the engine is allowed to be reduced, which thus improves the use conditions of the engine, and increases the durability of the engine. By controlling the generator to reduce the output power, the load of the engine can be reduced, and the output power of the engine to the generator can be reduced, which can avoid the engine from excessively reducing the output power that provides driving force for the vehicle, thereby the user experience is improved.

In the above embodiment, the water temperature of the engine is reduced by the control module mainly by means of reducing the output power of the engine and the output power of the generator. When the vehicle is operating in a high temperature environment, an air-conditioning compressor of the vehicle is often used by a user to reduce an in-vehicle temperature. The air-conditioning compressor mainly dissipates heat through the condenser, and the condenser is generally installed before a high-temperature radiator that dissipates heat for the engine, so when the output power of the air-conditioning compressor is too high, the condenser needs to increase the heat dissipation power, which will affect the effect of the high-temperature radiator on the heat dissipation of the engine, resulting in that the water temperature of the engine is too high. Based on this, when the current water temperature of the engine is relatively high, in addition to reducing the output powers of the engine and the generator, the control module may also be configured to generate a third control signal based on a relationship between the water temperature and a third output power of the air-conditioning compressor and control the air-conditioning compressor to reduce the third output power according to the third control signal. By simultaneously controlling the engine, generator and air-conditioning compressor to reduce the output power, the water temperature of the engine can be quickly reduced, the risk of excessive water temperature can be reduced, and the durability of the engine can be increased. Herein, when controlling the air-conditioning compressor to reduce the third output power, it may also be determined whether the third output power is greater than the minimum permitted power for operation of the air-conditioning compressor. If the third output power is greater than the minimum permitted power, the air-conditioning compressor may be controlled to reduce the current output power to avoid affecting the normal operation of the air-conditioning compressor.

A possible implementation, when generating by the control module a control signal based on the current water temperature of the engine, is that the control module may generate a first torque limit ratio and a second torque limit ratio, and control the engine and the generator to reduce the output powers based on the first torque limit ratio and the second torque limit ratio respectively. Herein, the first torque limit ratio indicates a ratio of an output power reduction value of the engine to the first output power, and the second torque limit ratio indicates a ratio of an output power reduction value of the generator to the second output power. For example, if the current first output power of the engine is P, and the corresponding first torque limit ratio of the engine is 0.2, indicating that an output power value that the engine needs to reduce is 0.2P, then the corresponding output power after the output power of the engine is reduced is 0.8P. Since the first torque limit ratio represents the degree to which the engine reduces the output power, the first torque limit ratio may be set to have a first positive correlation with the current water temperature of the engine, that is, the higher the current water temperature of the engine, the larger the first torque limit ratio is, indicating that the output power value that the engine needs to reduce is also larger, thereby the water temperature of the engine can be reduced more quickly. Similarly, the second torque limit ratio may be set to have a second positive correlation with the current water temperature of the engine, that is, the higher the current water temperature of the engine, the larger the second torque limit ratio is, indicating that the output power that the generator needs to reduce is also larger, thereby the water temperature of the engine can be reduced more quickly and the risk of overheating can be reduced.

Herein, the correlation between the current water temperature of the engine and the first torque limit ratio and the second torque limit ratio may be calibrated in advance through experiments, and the power output of the engine and the cooling effect of the water temperature of the engine are comprehensively considered to achieve different first torque limit ratios and second torque limit ratios corresponding to different water temperatures, while minimizing the impact on the power output of the vehicle and the user experience, and achieving a better cooling effect.

In practical applications, because different vehicle models may have different power output effects caused when reducing the engine output power, a possible implementation is that when the first torque limit ratio is calibrated according to the current water temperature, the first torque limit ratio may be calibrated according to the maximum required power under the current working condition of the vehicle, and may be experimentally calibrated in combination with specific vehicle models, which is not limited in this embodiment.

Under normal circumstances, the generator of the vehicle is in a high-power operating state, so when the second torque limit ratio is calibrated according to the current water temperature, the second torque limit ratio may be determined according to the rated power of the generator. In addition, since the generator needs to charge the power battery when the power battery is insufficient to prevent the power battery from affecting the service life due to low power, the output power reduction value of the generator may also consider a state of charge (State of Charge, SOC) of the power battery. The state of charge indicates a ratio of the remaining power of the power battery to the power under a fully-charged state. When the remaining power of the power battery is smaller, the generator needs to provide more power to the power battery, and the corresponding transmission power is larger, so the corresponding second torque limit ratio is smaller, that is, the output power value reduced by the generator is smaller. In actual calibration, without affecting the service life of the power battery, the effects of reducing the load of the engine and reducing the water temperature of the engine can be comprehensively considered to reduce the risk of excessive engine water temperature and increase the durability of the engine.

Similarly, when the output power of the air-conditioning compressor is too large, the third control signal generated by the control module may be a third power limit ratio, and the third power limit ratio indicates a ratio of an output power value reduced by the air-conditioning compressor to the third output power.

As shown in Table 1, a correspondence of the water temperature of the engine in relation to the first torque limit ratio, the second torque limit ratio and the third power limit ratio is provided in this embodiment. In Table 1, x represents the maximum temperature limit allowed for long-term operation of the engine, A represents the maximum required power under the current working conditions of the vehicle, B represents a power reference value for determining the second torque limit ratio, and C represents the rated power of the generator, where B can be determined based on C. The relationship between B and C may be found in Table 2. T represents a correction coefficient affected by the ambient temperature. The third power limit ratio of the compressor is affected by the ambient temperature. T is calibrated according to the actual situation of the vehicle. The third power limit ratio is reduced when the ambient temperature is too high. In Table 2, y represents the minimum remaining power allowed by the battery pack, which is generally determined by the capacity of the batteries. It should be noted that, under normal circumstances, the values of A and B are both smaller than 100.

**Table 1: Correspondence of the water temperature in relation to the first torque limit ratio, the second torque limit ratio and the third power limit ratio**

| Water temperature | x-2 | x-1 | x | x+1 | x+2 | x+3 | x+4 | x+5 |
|---|---|---|---|---|---|---|---|---|
| First torque imit ratio | 0 | 0.2* A% | 0.3*A % | 0.4*A % | 0.5*A % | 0.6*A % | 0.7*A % | A% |
| Second torque imit ratio | 0 | 0.1* B% | 0.2*B % | 0.3*B % | 0.4*B % | 0.6*B % | 0.7*B % | B% |
| Third power imit ratio | 0 | 0 | 0.1*T1 | 0.2*T2 | 0.3*T3 | 0.4*T4 | 0.5*T5 | 0.6*T6 |

**Table 2: Correspondence of the second torque limit ratio in relation to the rated power of the generator and the remaining battery power**

| Remaining battery power | y+7 | y+6 | y+5 | y+4 | y+3 | y+2 | y+1 | y |
|---|---|---|---|---|---|---|---|---|
| B | C | 0.8C | 0.6C | 0.5C | 0.4C | 0.3C | 0.2C | 0.1C |

It should be noted that the correspondence provided in the above embodiment in relation to the first torque limit ratio, the second torque limit ratio and the third power limit ratio determined according to the water temperature is only an exemplary description, and is not intended to limit the above implementation. The water temperature range may also be divided into a smaller range, and the effect of reducing the water temperature may be comprehensively considered for determination in practical applications, which is not limited in this embodiment of the present application. According to Table 1, in this embodiment, when the water temperature of the engine is greater than x-2 (x is the maximum temperature limit allowed for long-term operation of the engine), the engine and the generator are controlled to enter a torque limit range, that is, the output powers are reduced. If the current water temperature of the engine is greater than x-1, the engine, the generator and the air-conditioning compressor may be controlled to reduce the output power at the same time, the torques are limited, so as to quickly reduce the water temperature of the engine. In a possible implementation, after the engine, the generator and the air-conditioning compressor are torque-limited, when the water temperature of the engine collected is smaller than x-6, indicating that the water temperature of the engine is within the normal range, the engine, the generator and the air-conditioning compressor may be controlled to exit the torque limit range, that is, to restore the output power to the normal operation. As shown in FIG. 2 which is a schematic diagram of controlling the water temperature of the engine. When the water temperature of the engine is greater than x-2, a cooling strategy needs to be adopted for the engine, that is, the engine and the generator are torque-limited by the control module to reduce their respective output power. When the current output power N of the air-conditioning compressor is greater than the minimum permitted power, the air-conditioning compressor may also be torque-limited so as to reduce the engine water temperature more quickly. Then the water temperature of the engine is re-collected regularly. When the water temperature is smaller than x-6, the control module controls the engine, generator and air-conditioning compressor to restore to normal operation and no longer executes the torque limit strategy.

In the above embodiment of the present application, when the power battery is insufficient and cannot charge the motor, the engine needs to drive the generator to charge the battery while providing power to the vehicle, so the excessive output power of the engine and excessive water temperature will be easily caused. To minimize the torque limit on the engine, during the operation of the vehicle, if the current water temperature of the engine is lower than a second preset water temperature, that is, there is no risk of overheating of the engine, the control module may generate a fourth control signal to control the engine to drive the generator to operate, charge the power battery to a target power, and keep the power battery at the target power. In this way, when the water temperature becomes higher, the power battery can also provide electric energy for the motor to drive the vehicle, which reduces the output power of the engine for driving the generator to charge the power battery and lowers the water temperature.

In a possible implementation, when the vehicle is operating in the high temperature environment, the heat dissipation performance of the engine will be affected, so different target power of the power battery may be determined according to different ambient temperatures. As shown in Table 3, a correspondence between an ambient temperature and a target power value of the power battery is provided in accordance with this embodiment.

**Table 3 Correspondence between ambient temperature and target power**

| Ambient temperature | SOC value |
|---|---|
| -30 | Y+20 |
| -15 | Y+10 |
| 0 | Y+7.5 |
| 15 | Y+5 |
| 20 | Y+3.5 |
| 30 | Y+3.5 |
| 38 | Y+8.5 |
| 40 | Y+11 |

According to Table 3, under the high temperature environment, the heat dissipation performance of the engine will be affected. When the ambient temperature is lower, the SOC is too low and the power output of the battery will be affected, so the target power of the power battery may be set higher, and the power battery may be used more to provide power for the motor to prevent the subsequent engine output power from being too high and causing the water temperature to rise too quickly.

It should be noted that the method of determining the target power according to the ambient temperature provided in the above embodiment is only an exemplary description, which does not limit the present application in any form.

In the method for controlling engine water temperature provided in the above embodiment, the engine, the generator and the air-conditioning compressor are controlled through the control module. In actual applications, the engine, the generator and the air-conditioning compressor may also be controlled by different controllers. The following will be introduced in conjunction with a specific scenario.

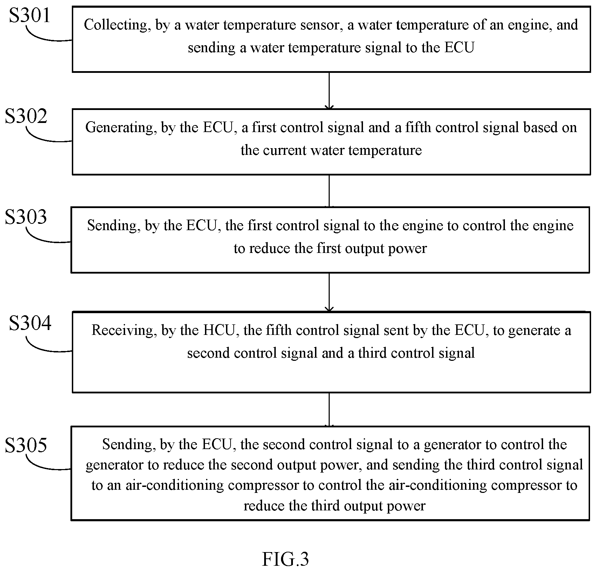

Referring to FIG. 3, which is a flow chart of another method for controlling engine water temperature in an embodiment of the present application.

In this application scenario, the water temperature of the engine is collected by a water temperature sensor of the engine and then fed back to the control module. The control module includes an electronic control unit (Electronic Control Unit, ECU) and a hybrid control unit (Hybrid Control Unit, HCU), and the torque limiting strategy is implemented by using the ECU and the HCU.

Specifically, after the water temperature of the engine is collected by the water temperature sensor of the engine, a signal carrying the current water temperature of the engine is sent to the ECU. The ECU determines whether the current water temperature of the engine exceeds the first preset water temperature. If the current water temperature of the engine exceeds the first preset water temperature, then it is determined by the ECU that the torque limit strategy needs to be executed on the vehicle, and a first control signal and a fifth control signal are generated. The first control signal is used to instruct the engine to reduce the first output power, and the fifth control signal is used to control an operation of the HCU. **In** the present application scenario, the ECU cannot directly control operations of the generator and the air-conditioning compressor, so it is necessary to generate a control instruction for the HCU, to realize the control operations on the generator and the air-conditioning compressor by means of the HCU, that is, the HCU needs to receive the control instruction of the ECU to realize the control of other components.

After the first control signal is sent by the ECU to the engine, the engine is configured to reduce the current first output power according to the first control signal. After the fifth control signal is sent by the ECU to the HCU, the HCU is configured to generate a second control signal for the generator and a third control signal for the air-conditioning compressor based on the control instruction of the ECU. The generator, after receiving the second control signal, is configured to reduce the second output power, to reduce the load of the engine and reduce the output power of the engine to the generator, so as to avoid the engine greatly reducing the power output of the vehicle and affecting the user experience. The third control signal is sent by HCU to the air-conditioning compressor, and when the third output power of the air-conditioning compressor is greater than the minimum permitted power, the current third output power is reduced.

By controlling the engine, generator and air-conditioning compressor to reduce the output power through the ECU and HCU respectively, the water temperature of the engine can be reduced more quickly, while avoiding the engine from greatly reducing the power output of the vehicle, thus, the user experience can be improved.

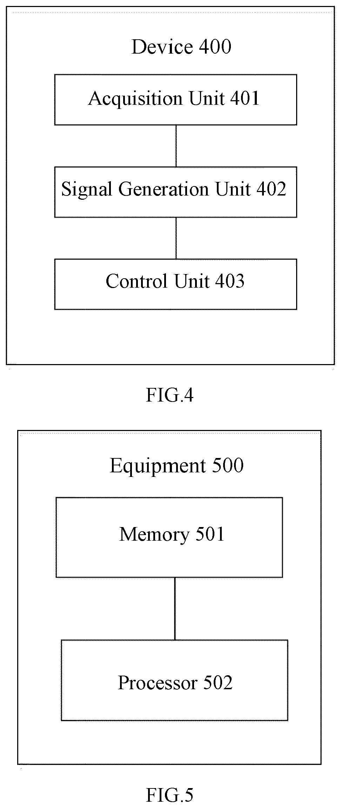

Based on the above method embodiment, a device for controlling engine water temperature is also provided by an embodiment of the present application. Referring to FIG. 4 which is a schematic diagram of the device for controlling engine water temperature in the embodiment of the present application.

The device 400 includes: an acquisition unit 401, a signal generation unit 402 and a control unit 403.

The acquisition unit 401 is configured to obtain a current water temperature of an engine.

The signal generation unit 402 is configured to generate a first control signal and a second control signal based on relationships between the current water temperature and a first output power of the engine as well as between the current water temperature and a second output power of a generator when the current water temperature is higher than a first preset water temperature. The first control signal is used to instruct the engine to reduce the first output power, and the second control signal is used to instruct the generator to reduce the second output power.

The control unit 403 is configured to control the engine to reduce the first output power according to the first control signal, and control the generator to reduce the second output power according to the second control signal.

The beneficial effects of the device for controlling engine water temperature provided by the embodiment of the present application can be found in the above method embodiment, which will not be repeated here.

Based on the above method embodiment and device embodiment, a piece of equipment for controlling engine water temperature is also provided by an embodiment of the present application. Referring to FIG. 5, the piece of equipment 500 includes: a memory 501 and a processor 502.

The memory 501 is configured to store relevant program codes.

The processor 502 is configured to invoke the program codes to execute the method for controlling engine water temperature described in the above method embodiment.

In addition, in an embodiment of the present application, a computer-readable storage medium is also provided, which is configured to store a computer program, and the computer program is configured to execute the method for controlling engine water temperature described in the above method embodiment.

It should be noted that the various embodiments in the present application are described in a progressive manner, and each embodiment focuses on the differences from other embodiments. The same and similar parts between various embodiments may be referred to each other. In particular, for the system or device embodiments, since they are basically similar to the method embodiment, the descriptions are relatively simple, and the relevant parts may be referred to the partial description of the method embodiment. The device embodiments described above are merely illustrative, in which the units or modules described as separate components may or may not be physically separated, and the components displayed as units or modules may or may not be physical modules, that is, these units or modules may be located in one place, or may be distributed on multiple network units, and some or all of the units or modules may be selected according to actual needs to achieve the purpose of the scheme of this embodiment, which may be understood and implemented by persons skilled in the art without exerting creative efforts.

It should be understood that in the present application, the expression "at least one" means one or more, and the phrase "a/the plurality of" means two or more. The term "and/or" is used to describe the association relationship of associated objects, indicating that three relationships may exist. For example, "A and/or B" may mean: A exists alone, B exists alone, and A and B exist simultaneously, where A and B may be singular or plural. The character "/" generally indicates that the associated objects before and after are in an "or" relationship. The expression "at least one of the following items" or the like refers to any combination of these items, including any combination of single items or plural items. For example, at least one of a, b or c may means: a, b, c, "a and b", "a and c", "b and c", or "a and b and c", in here, a, b and c may be singular or plural.

It should also be noted that in the present application, the relational terms such as first and second are only used to distinguish one entity or operation from another entity or operation, and do not necessarily require or imply any such actual relationship or order between these entities or operations. Moreover, the terms "include", "comprise" or any other variants thereof are intended to cover non-exclusive inclusion, so that a process, method, article or equipment including a series of elements includes not only those elements, but also other elements not explicitly listed, or also includes elements inherent to such process, method, article or equipment. In the absence of further restrictions, the elements defined by the sentence "including an/a..." do not exclude the existence of other identical elements in the process, method, article or equipment including the elements.

The steps of the method or algorithm described in conjunction with the embodiments disclosed herein may be implemented directly by using the hardware, software modules executed by a processor, or a combination of the two. The software modules may be placed in a random-access memory (RAM), an internal memory, a read-only memory (ROM), an electrically programmable ROM, an electrically erasable programmable ROM, a register, a hard disk, a removable disk, a CD-ROM, or a storage medium in any other form known in the art.

The above description of the disclosed embodiments enables professionals in the field to implement or use the present application. Various modifications to these embodiments will be obvious to professionals in the field, and the general principles defined herein may be implemented in other embodiments without departing from the spirit or scope of the present application. Therefore, the present application will not be limited to the embodiments shown herein, but will conform to the widest scope consistent with the principles and novel features disclosed herein.

## Claims

1. A method for controlling engine water temperature, **characterized in that** the method comprises:
obtaining, by a control module, a current water temperature of an engine;
generating, by the control module, a first control signal and a second control signal based on relationships between the current water temperature and a first output power of the engine as well as between the current water temperature and a second output power of a generator when the current water temperature is higher than a first preset water temperature, wherein the first control signal is used to instruct the engine to reduce the first output power, and the second control signal is used to instruct the generator to reduce the second output power; and
controlling, by the control module, the engine to reduce the first output power according to the first control signal, and controlling the generator to reduce the second output power according to the second control signal.

2. The method according to claim 1, **characterized in that** the method further comprises:
generating, by the control module, a third control signal based on a relationship between the current water temperature and a third output power of an air-conditioning compressor, wherein the third control signal is used to instruct the air-conditioning compressor to reduce the third output power; and
controlling, by the control module, the air-conditioning compressor to reduce the third output power according to the third control signal.

3. The method according to claim 2, **characterized in that** before said controlling, by the control module, the air-conditioning compressor to reduce the third output power according to the third control signal, the method further comprises:
obtaining a minimum permitted power for operation of the air-conditioning compressor; and
determining that the third output power is greater than the minimum permitted power.

4. The method according to claim 1, **characterized in that** the first control signal is a first torque limit ratio of the engine, and the first torque limit ratio indicates a ratio of an output power reduction value corresponding to the engine to the first output power; and
the second control signal is a second torque limit ratio of the generator, and the second torque limit ratio indicates a ratio of an output power reduction value corresponding to the generator to the second output power.

5. The method according to claim 4, **characterized in that** the first torque limit ratio is in a first positive correlation with the current water temperature, and the first positive correlation is that the first torque limit ratio increases with an increase of the current water temperature; and
the second torque limit ratio is in a second positive correlation with the current water temperature, and the second positive correlation is that the second torque limit ratio increases with an increase of the current water temperature.

6. The method according to claim 4, **characterized in that** the first torque limit ratio is determined according to a maximum required power of a vehicle; and
the second torque limit ratio is determined according to a rated power of the generator and a remaining power of a power battery, and the second torque limit ratio is in a third positive correlation with the remaining power of the power battery, and the third positive correlation is that the second torque limit ratio decreases as the remaining power of the power battery decreases.

7. The method according to claim 2 or 3, **characterized in that** the third control signal is a third power limit ratio of the air-conditioning compressor, and the third power limit ratio indicates a ratio of an output power reduction value corresponding to the air-conditioning compressor to the third output power.

8. The method according to any one of claims 1 to 6, **characterized in that** after said obtaining, by the control module, the current water temperature of the engine, the method further comprises:
generating, by the control module, a fourth control signal based on an external ambient temperature when the current water temperature is lower than a second preset water temperature, and the fourth control signal is used to instruct the engine and the generator to charge the power battery; and
controlling, the control module, the engine and the generator to charge the power battery to a target power according to the fourth control signal, wherein a correlation between the target power and the ambient temperature is predetermined.

9. The method according to claim 3, **characterized in that** the control module comprises an electronic control unit (ECU) and a hybrid power controller (HCU),
said generating, by the control module, the first control signal and the second control signal based on the relationships between the current water temperature and the first output power of the engine as well as between the current water temperature and the second output power of the generator comprises:
generating, by the ECU, the first control signal and a fifth control signal based on the relationship between the current water temperature and the first output power of the engine, and the fifth control signal is used to control an operation of the HCU; and
generating, by the HCU, the second control signal based on the fifth control signal and the relationship between the current water temperature and the second output power of the generator; and
said controlling, by the control module, the engine to reduce the first output power according to the first control signal, and controlling the generator to reduce the second output power according to the second control signal comprises:
controlling, by the ECU, the engine to reduce the first output power according to the first control signal; and
controlling, by the HCU, the generator to reduce the second output power according to the second control signal.

10. The method according to claim 9, **characterized in that** said generating, by the control module, the third control signal based on the relationship between the current water temperature and the third output power of an air-conditioning compressor comprises:
generating, by the HCU, the third control signal based on the fifth control signal and the relationship between the current water temperature and the third output power of the air-conditioning compressor; and
said controlling, by the control module, the air-conditioning compressor to reduce the third output power according to the third control signal comprises:
obtaining, by the HCU, a minimum permitted power for operation of the air-conditioning compressor;
determining that the third output power is greater than the minimum permitted power; and
controlling the air-conditioning compressor to reduce the third output power according to the third control signal.

11. The method according to claim 1, **characterized in that** the first preset water temperature is determined according to a maximum temperature limit corresponding to the engine.

12. A device for controlling engine water temperature, **characterized in that** the device comprises: an acquisition unit, a signal generation unit and a control unit;
the acquisition unit is configured to obtain a current water temperature of an engine;
the signal generation unit is configured to generate a first control signal and a second control signal based on relationships between the current water temperature and a first output power of the engine as well as between the current water temperature and a second output power of a generator when the current water temperature is higher than a first preset water temperature, wherein the first control signal is used to instruct the engine to reduce the first output power, and the second control signal is used to instruct the generator to reduce the second output power; and
the control unit is configured to control the engine to reduce the first output power according to the first control signal, and control the generator to reduce the second output power according to the second control signal.

13. A piece of equipment for controlling engine water temperature, **characterized in that** the piece of equipment comprises: a memory and a processor;
the memory is configured to store relevant program codes;
the processor is configured to invoke the program codes to execute the method for controlling engine water temperature according to any one of claims 1 to 11.

14. A computer-readable storage medium, **characterized in that** the computer-readable storage medium is configured to store a computer program, and the computer program is configured to execute the method for controlling engine water temperature according to any one of claims 1 to 11.
